(19) Europäisches Patentamt
European Patent Office
Office européen des brevets

(11) **EP 1 506 017 B1**

(12) **EUROPEAN PATENT SPECIFICATION**

(45) Date of publication and mention
of the grant of the patent:
**21.04.2010 Bulletin 2010/16**

(21) Application number: **03723031.5**

(22) Date of filing: **20.05.2003**

(51) Int Cl.:
**A23L 1/29** *(2006.01)* **G09B 19/00** *(2006.01)*

(86) International application number:
**PCT/IL2003/000413**

(87) International publication number:
**WO 2003/096873 (27.11.2003 Gazette 2003/48)**

(54) **PERSONAL NUTRITION CONTROL METHOD**

VERFAHREN ZUR PERSÖNLICHEN ERNÄHRUNGSKONTROLLE

PROCEDE POUR REGULER L'ALIMENTATION D'UNE PERSONNE

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **21.05.2002 US 151106**

(43) Date of publication of application:
**16.02.2005 Bulletin 2005/07**

(73) Proprietor: **Centrition Ltd.
Road Town, Tortola (VG)**

(72) Inventor: **Gordon, Roni
76870 Doar Na Emek-Soreq (IL)**

(74) Representative: **Vossius & Partner
P.O. Box 86 07 67
81634 München (DE)**

(56) References cited:
**US-A- 4 689 019     US-A- 4 976 622
US-A- 6 039 989     US-A- 6 039 989
US-A- 6 102 706     US-A- 6 102 706
US-A1- 2001 043 968**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD AND BACKGROUND OF THE INVENTION

The present invention relates to the field of diet control systems and more particularly to a highly flexible, personally directed food consumption method designed to allow a subject to plan, monitor, control, document, record and learn the appropriate nutritional intake.

One of the most prevalent health problems in the Western World and especially in the United States is that of excessive body weight. Being overweight is epidemic, with more than 50 percent of the adult population of the U. S. suffering therefrom.

Accordingly, developing and maintaining a physically fit and healthy body is becoming the goal of an increasing number of individuals. As of late, the public has become increasingly aware of the importance of a proper diet for weight control as well as for health maintenance and disease prevention. As a result, many diets have been designed to lose weight, to maintain present weight, or to assure the consumption of appropriate nutrition.

A large segment of the population is on a special diet at any given time. According to the American Obesity Association, it is estimated that 40% of the women and 25% of the men of the United States are on a special diet for the purpose of weight control. Unfortunately, most dieters fail to achieve their goals for a number of reasons. First, many diets have numerous different and often conflicting guidelines that are presented in a complex manner so that it is often difficult for a person to understand and carry out the diet correctly. A second reason is the often sparse, rigid or monotonous nature of the nutritional regimen prescribed. Self-deprivation is not a well developed trait in modern society. A third reason is that most diets do not address the need for the dieter to understand the underlying principles of the diet so that he/she can effectively maintain personally appropriate eating habits after the diet period has ended.

The bottom line with respect to all weight control diets is the need to limit calories. With very few exceptions (such as, for example, serious illnesses), the only way by which a person loses weight is by consuming less calories than is required by the body metabolism to support the required energy level. When fewer calories are consumed, the body metabolizes stored body fat, resulting in weight loss. Conversely, when too many calories are consumed, the body stores this excess energy source as body fat, resulting in weight gain.

It will be appreciated that the above description is somewhat simplified. Not only are calories important, it is also important to obtain the calories from foods that provide proper nutrition to the body. The body has a broad range of nutritional needs in order to maintain health and full function. Accordingly, a person who simply counts calories will not achieve the goal of developing and maintaining a physically fit and healthy body since being concerned with calories to the exclusion of all other factors will not provide proper nutrition.

It is known that a balanced diet includes food from several food groups in order to provide optimum levels of nutrients such as protein, carbohydrates, fats, fiber vitamins and minerals.

Accordingly, the prior art teaches many meal planning aids to assist dieters to consume a diet with proper macro and micronutrient balance. One such aid is disclosed in U.S. Patent No. 3,681,857 to Yardley which consists of a device which includes preprinted strips attached to a board which indicate the quantity of the different food items consumed and their nutrient value. Another is disclosed in U.S. Patent No. 4,310,316 to Thomann which is a diet control device consisting of tickets, vouchers and containers, color coded according to lists of foods and categories of foods. Further prior art diet aids include those disclosed in U.S. Patent No. 4,652,241 to McCarty which employs a device with movable members in display zones representing predefined food groups and portions; and in U.S. Patent No. 4,606,555 to Adams which uses a set of booklets and cards as a diet control device.

Although considerable effort is represented by the prior art with regard to administering dietary meal plans, the results have not been totally satisfactory due to the need for ongoing record keeping and oversight, and in most cases the procedures involved are cumbersome, time consuming, and inconvenient to carry out.

Another well-known diet management system, known generally as an "exchange diet", divides food into six groups or "exchanges." The original exchange diet, developed for diabetics and now used by anyone wishing to control or lose weight, is more specifically discussed in the booklet entitled "Exchange List For Meal Planning," prepared by the American Diabetes Association, Inc. and the American Dietetic Association. According to such exchange diets, food groups are referred to as exchanges, such as bread exchanges, meat exchanges, fat exchanges, fruit exchanges, milk exchanges, and vegetable exchanges. The "exchange" is a unit of food which may be different for each food group. However, within a particular food group each exchange is approximately equal in calories and in the amount of certain nutrients such as carbohydrates, proteins, fats, fiber minerals and vitamins. For each food group, an "exchange list" is provided which sets forth the amount of a specific food that constitutes an exchange. For example, in the above-identified booklet, a small apple and one-fourth of a cantaloupe melon is one fruit exchange.

The exchange diet further specifies the number of exchanges for each food group for a specified daily caloric intake. For example, for a daily two thousand calorie intake, a person is allowed nine bread exchanges, nine meat exchanges, four fat exchanges, six fruit exchanges, three milk exchanges, and two vegetable exchanges.

As can be seen, exchange diets require time and careful attention to carry out properly. A person observing an exchange diet must (a) determine the number of exchanges allowed for each food group, (b) keep track of the number of exchanges consumed in each food group, and (c) keep track of the number of exchanges remaining in each food group. Such information is typically processed and maintained by memory, by notes, or by predetermined menus. Experience has shown that these procedures are both time-consuming and prone to error.

In order to address this deficiency of exchange diets, aids have been developed to assist the dieter. One such aid is the mechanized management system disclosed in U.S. Patent No. 3,841,260 to Sharp. The system includes a sheet with an array of holes aligned in columns and rows representing the six different food groups. Color coded pegs, representing one exchange for the food group identified by the color of the peg, are inserted into the holes at appropriate locations. The system includes listings of foods in each food group and the number of exchanges permitted for each group for certain calorie intake limits. This system appears to be bulky and not readily carried by the user.

Another device to assist with the implementation of exchange diets is disclosed in U.S. Patent No. 4, 625,675 to Rosenberg which is a hand-held and portable manipulatable device with a housing, slide members, a numerical display and card inserts. A further attempt is disclosed in U.S. Patent No. 4,689,019 to Tilney which is a meal planning kit for adhering to a predetermined diet, primarily for diabetics. The kit contains color coordinated cards to match food groups, and self adhesive stickers for affixing to the cards.

While the above described devices and systems provide for orderly and systematic monitoring of exchange limits and exchanges consumed, they are all awkward and cumbersome to use on a daily basis.

A further well-known method of managing a diet consists of preprepared and prepackaged dietetic food. Indeed, supermarket shelves and freezers are full of such foods. Such dietetic food is often prepackaged into meals that provide well balanced nutrition with limited calories. However, they do not provide any guidance to the dieter for building nor adhering to a structured diet. Moreover, nothing prevents a hungry dieter from eating half a dozen of such meals each day or, for that matter, at a sitting.

Attempts have been made to structure a system of prepackaged meals into an ongoing diet. U.S. Patent No. 6,039,989 to Bangs provides a system of prepackaged meals for treatment of diet-responsive conditions and U.S. Patent No. 6,102,706 to Khoo discloses a compliance support system consisting principally of prepackaged meals. As these systems demonstrate, the problem of planning and maintaining a healthful diet goes beyond weight control concerns and exists with respect to other special diets such as those associated with diet-responsive health conditions like cardiovascular disease, diabetes, hypercholesterolemia, hyperglycemia, osteoporosis, cancer and many others, and those required for individuals with special sensitivities or allergies or individuals requiring a special diet such as athletes.

There are some advantages to such systems, as the variety of foods within the prepackaged meals enhances ongoing compliance with the diet and there is very little preparation or cooking to do. However, such meals and such systems that utilize such meals have a number of disadvantages, such as denying the dieter the option of selecting the components of each meal, not providing the dieter with the tools nor the knowledge to understand what he/she is consuming, not facilitating the dieter's ability to carry on healthy eating habits after ending the diet, and not providing any means for monitoring or oversight of compliance.

There is thus a widely recognized need for, and it would be highly advantageous to have, a nutrition control system that does not suffer the above described drawbacks.

## SUMMARY OF THE INVENTION

Accordingly, it is an object of the present invention to provide a nutrition consumption planning and control system which is easy to use and does not require an individual to identify and calculate the calories in any particular food being consumed as characterized in the claims.

Said nutrition consumption planning and control system is highly flexible and allows an individual to vary the foods being eaten for any meal, while still maintaining the desired caloric intake.

According to one aspect of the present invention there is provided a non-therapeutic method of monitoring or controlling a nutritional intake of a subject as characterized in the claims. Said method may comprise : (a) providing a plurality of food packages containing a plurality of , different types of foods, each having a predetermine and substantially uniform content of at least one nutritional component; and (b) monitoring or controlling the food packages consumed by the subject per eating session or per a predetermined time period; thereby monitoring or controlling the nutritional intake of the subject.

According to another aspect of the present invention there is provided a food unit as characterized in the claims which may comprise: (a) a package; (b) a type of food packaged in the package having a caloric content of 100 calories +/- 10%; and (c) an indication in print on or in the package indicating: (i) the caloric content of the food; and (ii) an availability of other food units having the caloric content of 100 calories +/- 10%.

Said food unit preferably further comprises: a removably affixable label on or in the package indicating thereon the predetermined content of the nutritional component.

Also described herein is a system for monitoring or controlling a nutritional intake of a subject, the system comprising (a) at least one package; (b) a type of food packaged in the package and having a predetermined content of at least one nutritional component, the package having therein or thereon information about the predetermined content of the nutritional component; and (c) a marker which provides information about at least one nutritional component; (d) a recording device for recording the information about the predetermined content of the nutritional component, such that the information on the package may be recorded in the recording device, thereby to monitor or control a nutritional intake of a subject.

According to yet another aspect of the present invention there is provided an assembly of food units as characterized in the claims which may comprise a plurality of food units, each food unit comprising: (a) a package; and (b) a different type of food packaged in the package and having a predetermined caloric content which is substantially uniform for all of the food units of the assembly of food units.

According to features in the described preferred embodiments each of the food packages is identified with respect to a type of food it contains.

According to features in the described preferred embodiments each of the food packages is identified with respect to its caloric content.

According to features in the described preferred embodiments each of the food packages contains an indication of the availability of a plurality of different types of foods having the predetermined caloric content.

According to features in the described preferred embodiments each of the food packages contains an indication of the method.

A nutritional component can be selected from the group consisting of carbohydrates, sugars, fats, fiber, cholesterol, proteins, amino acids, minerals and vitamins.

As used herein the term "about" refers to $\pm$ 10 %.

The calorie content is about 100 calories.

According to features in the described preferred embodiments the subject has a diet-responsive condition.

According to features in the described preferred embodiments the diet-responsive condition is selected from the group consisting of obesity, overweight, diabetes, hypercholesterolemia and hyperglycemia.

According to features in the described preferred embodiments the foods are selected from the group consisting of natural foods, processed foods and drinks.

According to features in the described preferred embodiments the foods are processed to extend shelf life.

According to features in the described preferred embodiments each of the packages is marked in a specific manner that identifies it with an assembly which comprises similarly marked packages.

According to features in the described preferred embodiments each of the food packages contains a marker which provides information about said caloric content.

According to features in the described preferred embodiments the marker is a removably affixable label.

According to features in the described preferred embodiments the method further comprises recording the information about said caloric content in a recording device.

According to features in the described preferred embodiments the recording device is a diary or a calendar, the marker being affixable thereto.

According to features in the described preferred embodiments the subject participates in a nutritional research.

According to features in the described preferred embodiments the plurality of food packages is prepackaged in a container.

According to features in the described preferred embodiments the plurality of food packages is displayed on a display.

According to features in the described preferred embodiments the time period is one day.

According to features in the described preferred embodiments the indication further indicates a method of monitoring or controlling a nutritional intake of a subject via monitoring or controlling a number of food units consumed by the subject per eating session or per a predetermined time period.

According to features in the described preferred embodiments the type of food is for consumption by a subject seeking to control calorie intake.

According to features in the described preferred embodiments the type of food is for consumption by a subject having a diet-responsive condition.

According to features in the described preferred embodiments the indication is located on a marker removably affixed to the package.

The present invention successfully addresses the shortcomings of the presently known configurations by providing a nutrition consumption planning and control system which is easy to use and does not require an individual to identify and calculate the calories in any particular food being consumed, which requires a subject to simply count the number of packages of food eaten in order to adhere to a predetermined caloric intake, and which is highly flexible and allows an individual to vary the foods being eaten for any meal, while still maintaining the desired caloric intake.

BRIEF DESCRIPTION OF THE DRAWING

With specific reference now to the drawings in detail, it is stressed that the particulars shown are by way of example and for the purposes of illustrative discussion of the preferred embodiment of the present invention only, and are presented in the cause of providing what is believed to be the most useful and readily understood description of the principles and conceptual aspects of the invention. In this regard, no attempt is made to show structural details of the invention in more detail that is necessary for a fundamental understanding of the invention, the description taken with the drawings making apparent to those skilled in the art how the several forms of the invention may be embodied in practice.

In the drawings:

FIG. 1 is a flowchart in accordance with the method of the present invention;
FIG. 2 is a perspective diagram illustrating a food package constructed in accordance with the present invention;
FIG. 3 is an illustration of a marker of the food package of FIG. 2; and
FIG. 4 is a perspective diagram illustrating a recording device constructed in accordance with the present invention;
FIGs. 5a-b are perspective diagrams illustrating assemblies of the food packages of FIG. 2.

DESCRIPTION OF THE PREFERRED EMBODIMENTS

The present invention as characterized in the claims is of a method of planning, controlling and monitoring nutrition consumption which is highly flexible and allows an individual to vary the foods being eaten without having to measure the quantities of the foods and calculate the calories therein. The present invention is further of prepackaged food items designed for implementing the method as characterized in the claims.

The principles and operation of a method of monitoring or controlling a nutritional intake of a subject according to the present invention may be better understood with reference to the drawings and accompanying descriptions.

In its broad sense, the present invention is of a method that includes of packaging and labeling food according to unit quantities of caloric content, in order to adhere to a predetermined regimen of personal daily nutrition, to facilitate the consumption of a predetermined quantity of calories or to monitor the caloric intake, as characterized in the appended claims.

As used herein, the term "food" refers to any natural, processed or otherwise produced solid or liquid comestible that is customarily eaten for the purpose of introducing digestible or non-digestible material into the gastro-intestinal tract.

As used herein, the term "personal daily nutrition" refers to the content and quantity of food, apportioned and packaged into single portions having a predetermined and substantially uniform caloric content, that is consumed in a predetermined time period, preferably one day.

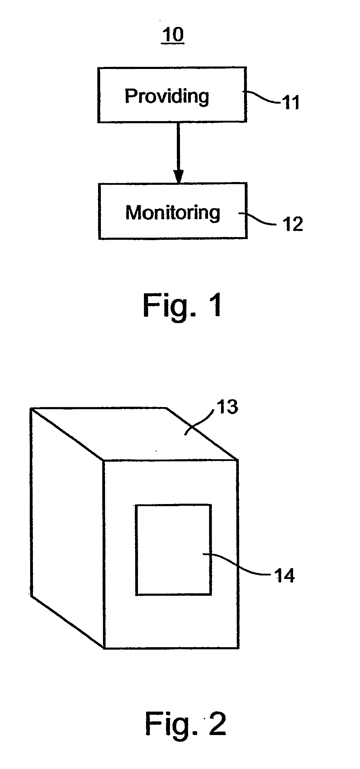

Thus, according to the present invention, and as illustrated in Figures 1-5, there is provided a method of monitoring or controlling a nutritional intake of a subject which is referred to herein as method **10.**

Reference is now made to Fig. 1 which shows a flow chart illustrating method **10,** showing a process with a minimum of two steps. The first step, referred to hereinafter as providing step **11,** consists of providing a plurality of food packages containing a wide variety of different types of food, each having a predetermined and uniform caloric content of 100 calorie $\pm$ 10%, to a subject. The second step, referred to hereinafter as monitoring step **12,** consists of monitoring or controlling the number of food packages consumed by the subject in a predetermined time period, preferably one day.

Reference is now made to Fig. 2 which shows a package for packaging food in accordance with the teachings of the present invention, hereinafter referred to as package **13.** Package **13** is shown in a simplified form representative of the packaging appropriate for the type of food that may be packaged for use as part of method **10.** It is understood that package **13** may be any type of package, made of any material, in which comestible substances are or may be enclosed for storage until eaten. The alternatives of material, design and configuration of package **13** are vast, consistent with current and future packaging technology and practices for the very wide scope of foods that may be packaged therein.

The range of foods, both natural and processed, that may be packaged in package **13** is extremely varied and broad and may include natural and processed foods from all commonly existing food groups, such as bread, baked goods, grains, pasta, rice; vegetables; fruits; milk products, liquid and solid; high protein products such as meat, fish, chicken, beans, eggs and processed proteins; oils, sauces and gravy; snacks such as peanuts, pretzels, potato chips; sweets; beverages such as soft drinks, juice, alcoholic beverages; and more. Each package **13** is identified with respect to the type of food it contains, preferably both in writing and optionally via an image. Moreover, the foods may be packaged and stored in varying conditions, according to the method of storage and desired preparation method. For example, foods may be packaged after mixing, precooking, freezing, dehydrating, freeze-drying or otherwise treating them for purposes of preservation. Preferably, such foods have a sufficiently long storage or shelf-life that they may be packaged well in advance of consumption. For some foods it is known that storage or shelf-life under retail conditions ranges between nine to twelve months.

The gist of the present invention is that the foods, irrespective of their type or nature, are packaged in quantities having a predetermined and uniform caloric content of 100 calories +/- 10%, for example, when method **10** is employed for weight control purposes. Each package is preferably identified with respect to the predetermined caloric content it contains. Moreover, each package preferably contains an indication of the availability of different types of food having the same predetermined caloric content.

Packages of food, each having packaged therein a type of food in a quantity having a predetermined caloric content is hereinafter referred to herein as food units.

Method **10** is useful for a number of different purposes. For example, method **10** may be employed for purposes of weight control by assisting dieters to comply with a predetermined daily caloric intake. Accordingly, food products will be packaged in quantities containing a 100 calories +/- 10%. Method **10** may also be employed to implement a dietary health management plan for preventing, treating or reducing risk factors associated with diet-responsive conditions as characterized in the claims, such as obesity or overweight; hyperlipidemia; non-insulin dependent diabetes; hypercholesterolemia; hyperglycemia and many others by supplying a diet avoiding certain nutritional components that cause or exacerbate such conditions.

A preferred embodiment of the invention is for method **10** to be used to treat obesity and overweight conditions for weight reduction, as method **10** is well suited to provide a controlled and consistent daily caloric level.

No single caloric level or range is appropriate for all persons. Therefore, in order to effectively use method **10** for this purpose, it is necessary to determine an appropriate caloric intake level. This may be determined by the subject's Physician or calculated for each person individually by entering personal data into the gender specific Harris-Benedict equation, as follows: First, the person's sex, weight (W) (in kilograms), height (H) (in centimeters), and Age in years (A) are determined.

The person's activity level then is determined from the following scale.

| Very light | 1.3 | (about 10 hours rest, about 14 hours of very light activity) |
| Light | 1.5 | (sedentary job, minimal leisure time activity) |
| Light-moderate | 1.625 | (sedentary job, about 2-3 hours regular leisure-time activity/week) |
| Moderate | 1.75 | (sedentary job, > about 3 hours regular leisure-time activity/week) |
| Strenuous | 2.0 | (regular leisure-time activity/week) |
| Very Strenuous | 2.3 | (light-moderate manual labor heavy labor) |

Second, the weight, height, age, and activity values are entered into the following gender-specific equation:

Males:

$$[66.5 + (13.8 \times W) + (5.0 \times H) - (6.8 \times A)] \times \text{Act. Allow.}$$

Females:

$$[655.1 + (9.6 \times W) + (1.8 \times H) - (4.7 \times A)] \times \text{Act. Allow.}$$

Act. Allow. = activity allowance

These equations provide the recommended daily caloric intake.

Accordingly, method **10** provides a range of food units or packages, each containing a type of food having a predetermined content of about 100 calories. The food type in each package may vary and will preferably comprise a wide range of foods from each of the food groups. For example, each package may contain a food selected from the dairy product group and may include a serving equivalent to 100 calories of skim milk, cottage cheese, yogurt or the like. The package may contain a selection from the fruit group such as an apple, banana, orange, pear, plum, grapefruit, melon or a serving of berries cherries or grapes, each equivalent to 100 calories. It may contain bread or baked goods equivalent to 100 calories, or a 100 calorie equivalent portion selected from the vegetable group such as a serving of asparagus, beets, tomatoes, mushrooms, carrots, zucchini, green beans, broccoli, or the like. These vegetables may be packaged raw or cooked or combined into a serving of mixed vegetables which may include a calorie controlled amount of sauce or dressing. The package may be a can or bottle containing a 100 calorie serving of a soft drink or juice. As can be seen, a wide variety of different food products, prepared in different fashions, may be selected from in order to comply with the predetermined daily calorie level.

Accordingly, a person may select from a widely varied "menu" of options in selecting a daily diet. All that is needed in order to consume the correct amount of calories is to determine and count the packages consumed.

However, in order to attain proper nutrition, it is also necessary to ingest a balanced diet such that the calories are acquired from different nutritional sources. In accordance with recommendations by the National Academy of Science, National Research Council and Food and Nutrition Board Subcommittee on the Recommended Dietary Allowances, diets preferably provide about 20 to 30% of calories from fat, about 15 to 20% from protein, and about 55 to 60% from carbohydrates. Therefore, food units will also indicate the type of food within the package and preferably the nutrient that the food represents.

Also described herein is method **10** to be used to provide a desired amount of nutrients such as protein, carbohydrates, fats, fiber, vitamins and minerals, to fortify and enhance a diet. It is known that various combinations of macro and micronutrients are desirable to address specific needs in treating and preventing diet-responsive conditions, as well as maintaining general good health. Therefore, food units may be created such that the quantities in each package **13** will have a substantially uniform quantity of one or more of such nutritional components.

In particular, such food units may contain vitamins and minerals for which a USRDA has been set by the U.S. food and Drug Administration or by the U.S. Department of Agriculture (USDA), such as Vitamins A, $B_1$, $B_2$, $B_3$, $B_6$, $B_{12}$, C, D, E, and K, and Biotin, Calcium, Copper, Folic Acid, Iodine, Iron, Magnesium, Manganese, Pantothenic Acid, Phosphorus, and Zinc. It is understood that fortification of certain nutritional components may require approval by a governmental regulatory authority, such as the USDA.

Vitamins and minerals, for which a USRDA has been established, are identified in the following table, along with the respective amount.

U.S. Recommended Dietary Allowance (USRDA)

| NUTRIENT | USRDA |
|---|---|
| VITAMIN A | 5000 IU |
| VITAMIN $B_1$ | 1.5 mg |
| VITAMIN $B_2$ | 1.7 mg |
| VITAMIN $B_3$ | 20 mg NE.sup.1 |
| VITAMIN $B_6$ | 2 mg |
| VITAMIN $B_{12}$ | 6 mcg |
| VITAMIN C | 60 mg |
| VITAMIN D | 400 IU |
| VITAMIN E | 30 IU |
| VITAMIN K | NONE ESTABLISHED |
| BIOTIN | 300 mcg |
| CALCIUM | 1000 mg |
| COPPER | 2 mg |
| FOLIC ACID | 400 mcg |
| IODINE | 150 mcg |
| IRON | 18 mg |
| MAGNESIUM | 400 mg |
| MANGANESE | NONE ESTABLISHED |
| PANTOTHENIC ACID | 10 mg |
| PHOSPHORUS | 1000 mg |
| ZINC | 15 mg |

Food units according to method 10 will preferably contain an amount that allows a subject to achieve the USRDA minimum or other designated level of consumption of any particular nutrient by eating a predetermined number of food units per day. As with calories, in order to achieve the USRDA minimum of nutrients, a subject need only count the food units containing the relevant nutrient eaten each day.

Method **10** may be used to provide a predetermined amount of a nutritional component in order to treat a diet responsive condition. Many conditions are diet responsive. Indeed, there are those who would argue that all physical conditions are diet responsive. Without arguing the validity of the assertion, suffice is to say that there are a number of conditions about which there is no argument that they are diet responsive, similar to obesity and overweight, discussed hereinbefore.

Accordingly, method **10** may preferably be used by a subject who suffers from diabetes, hypercholesterolemia, hyperglycemia and other diseases and conditions. For example, a diet for both medically stabilized and non-medically stabilized diabetes is designed to control plasma glucose and plasma lipid levels and maintain body weight at a level appropriate for the particular patient. Therefore, such a diet will have two components: First, the ADA has recommended that the intake of simple sugars be restricted and that complex carbohydrates be increased for diabetics; and second, the diet will include an appropriate caloric level tailored to a subject's height, weight, age, sex and activity level. Although the indicators associated with diet-responsive diabetes must be specifically determined for each individual patient, a typical 1500 calorie menu prepared by the ADA holds simple sugars to within a range of about 96 to 107 grams from fruits and vegetables. Accordingly, method **10** is useful for diabetics as it can be used to control and monitor both sugar intake and calories simultaneously.

Subjects suffering from hypercholesterolemia or any form of hyperlipidemia are often instructed to limit fats, particularly polyunsaturated fatty acids, in order to lower total serum cholesterol, triglycerides and LDL. Subjects most likely to achieve reductions in cholesterol and triglyceride levels as a result of dietary control are those without lipid lowering medication that have cholesterol levels in a range of about 220 to 300 mg/dl or triglyceride levels in a range of about 200 to 1000 mg/dl, or both, or those with lipid lowering medication that have cholesterol levels of about 200 to 260 mg/dl or triglyceride levels of about 200 to 1000 mg/dl. By using method **10,** a subject can easily control and monitor the intake of fat in the diet, which may have the added benefit of reducing dependency on lipid lowering medication.

Cancer is another disease about which there is controversy regarding its responsiveness to dietary factors. However, it is acknowledged that certain dietary elements influence the progression of the disease. High dietary fiber, low fat consumption and adherence to daily recommended allowances for certain vitamins and minerals, including vitamins A and C, reduce the risk factors associated with various types of cancers. Method **10** may be easily applied to both structure an appropriate diet and to easily adhere to it without cumbersome or difficult calculations by determining and consuming the correct number of the appropriate food units.

As illustrated above, method **10** is designed to be a highly flexible instrument for building a diet appropriate for a variety of purposes. The great variation of the food units themselves will make it easy to create an interesting and balanced diet while at the same time observing a wide range of dietary restrictions, both those avoiding or limiting certain nutrients and those in which a predetermined quantity of certain calories must be eaten. Method **10** will make it almost effortless and foolproof to observe all such requirements.

Method **10** may also preferably provide guidance with respect to proper adherence to dietary guidelines. For this purpose, each food unit may preferably contain an indication of the nature of method **10** and its implementation. In this connection, each package **13** may preferably contain an indication of different foods that are similarly packaged, each one containing the predetermined uniform caloric content of 100 calories +/- 10%. Each package **13** may also preferably contain a list of different foods being packaged such that each one contains the predetermined caloric content.

Method 10 may also preferably be used to closely monitor the food intake of a subject and to accurately document the food units consumed. Method **10** is particularly designed for carrying out such precise record keeping in an easy and convenient manner.

The purpose of monitoring nutritional intake may vary, and therefore method **10** is useful for a number of purposes. For example, strict adherence to a diet may be essential for treatment of a health condition; a subject may wish to monitor intake in order to understand the relationship between food intake and weight gain or loss; diet restriction may be needed to study the relationship between intake of various food components and related physiological conditions, including the influence of certain substances; limited or restricted food intake may be an aspect of scientific or statistical research, requiring close observation; and there may be additional reasons why a diet must be carefully monitored or controlled.

It is a feature of method **10** to facilitate the documentation by the dieter of the nutritional components consumed. Whereas other food packaging methods and configurations may provide a range of nutritional information, some of which is required by law, method **10** not only provides information to the dieter, but also provides an easy and foolproof way to accurately document that information. It is understood that such documentation may be medically required for accurate follow-up of disease treatment or for other purposes. Such documentation may also be used simply to assist a dieter to learn his/her actual nutritional needs and to incorporate appropriate eating habits into daily life.

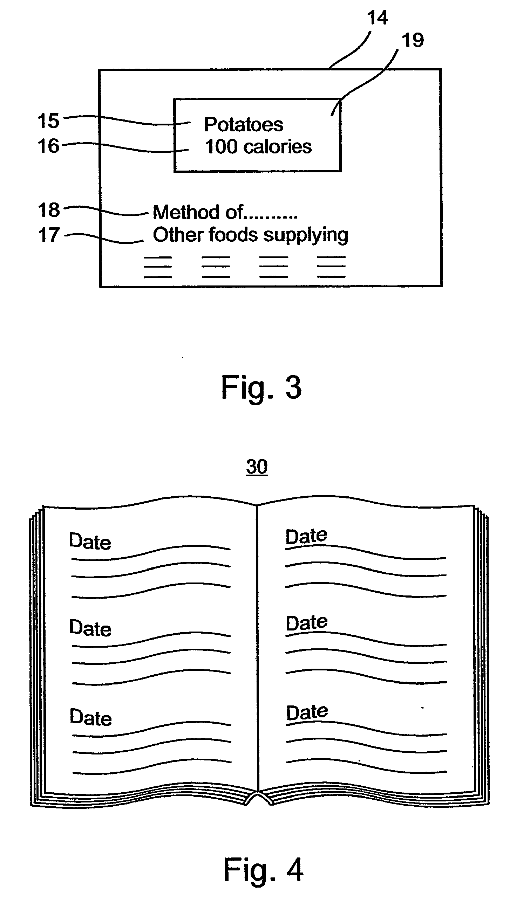

Reference is made to Figure 3 in which package **13** is shown containing a marker **14** having thereon an indication in print identifying the type of food contained therein, hereinafter referred to as indication **15** and indicating the predetermined caloric content hereinafter referred to as indication **16**. In addition, each marker **14** may also preferably have other useful information, such as an indication of the availability of a plurality of different types of food having the same predetermined caloric content, hereinafter referred to as indication **17,** or an indication of the method of using the plurality of different types of food to form a personal daily nutritional intake, hereinafter referred to as indication **18.**

Marker **14** may be of many different types, attached on or inserted in each package **12**. It is a feature of marker **14** that indications **15** and **16** be removable and reattachable such that these indications may be easily removed from package **13** and recorded in a recording device.

Reference is made to Figure 4 which shows a recording device **30** in accordance with a preferred embodiment of the present invention. Recording device **30** is shown as a daily diary with pages having spaces on which information relevant to food intake may be entered. It is understood that recording device **30** may also take the form of a calendar, a loose-leaf binder and pages or any other device for orderly retention of information.

The purpose of method **10** is to monitor caloric intake. Accordingly, in order to document the adherence to a nutritional regimen by creating a contemporaneous record of the caloric intake, a subject merely has to transfer indications **15** and **16** from package **13** to recording device **30** which records it at the time of eating the contents of the package. One way such a transfer may be effected is by marker **14** itself being removable and reattachable in recording device **30** configured as a daily diary, with spaces provided for the requisite number of markers **14** each day. Alternately, marker **14** could contain thereon a removably affixable label **19,** which contains a one use adhesive permitting it to be stuck onto a page in recording device **30** configured as a daily record in either book or calendar form. Other alternative documentation methods may be employed so long as they permit the recording of the information on the package along with the consumption of the food within the package. Such methods may consist of adhesive stickers with printed information, graphics, symbols or any identifiable indication. Additionally, such stickers may be used for the purpose of documenting non-nutritional elements related to the subject, such as exercise, daily activities and the like in order to create a more complete or comprehensive daily record of the factors affecting a subject's health. A further documentation method may employ a coded reference which appears on marker **14** or on package **13** in a machine readable code such as a bar code which can be read and decoded by an optical reader which transmits to recording device **30** configured as an electronic database. A subject could simply scan the coded reference immediately prior to opening package **13** in order to effortlessly create a precise and accurate contemporaneous record of the nutrition consumed each day, including the time of consumption of each food unit. Such codes, optical readers and electronic databases are well known in the art and therefore neither a more detailed description nor an explanation is required herein.

It is understood that recording device **30** will preferably be used while implementing method **10** and will therefore be designed and configured to assist a dieter to conform to the requirements of method **10.** Accordingly, recording device **30** may preferably contain useful information such as an indication of the availability of a plurality of different foods being packaged such that each one contains the same predetermined caloric content.

It is envisioned that an extremely wide variety of food units may be provided within the scope of method **10,** each one being identified as one of an assembly of food units comprising a plurality of food units. Each food unit of the assembly of food units will have a package marked in a specific manner that identifies it as part of the assembly and capable of being combined with other food units having similarly marked packages to form a diet of personal daily nutrition that may be directed toward one or more dietary purposes. The distinctive marking that so identifies each food unit may be of any type, such as printing, graphics, symbols, color scheme, type or shape of the package or any manner of distinctive marking such that the package bears the visible identity of the assembly of which it forms a part. Such distinctive marking may preferably constitute a registered mark or "brand" for the purpose of protecting the producer/ manufacturer and to promote consumer recognition.

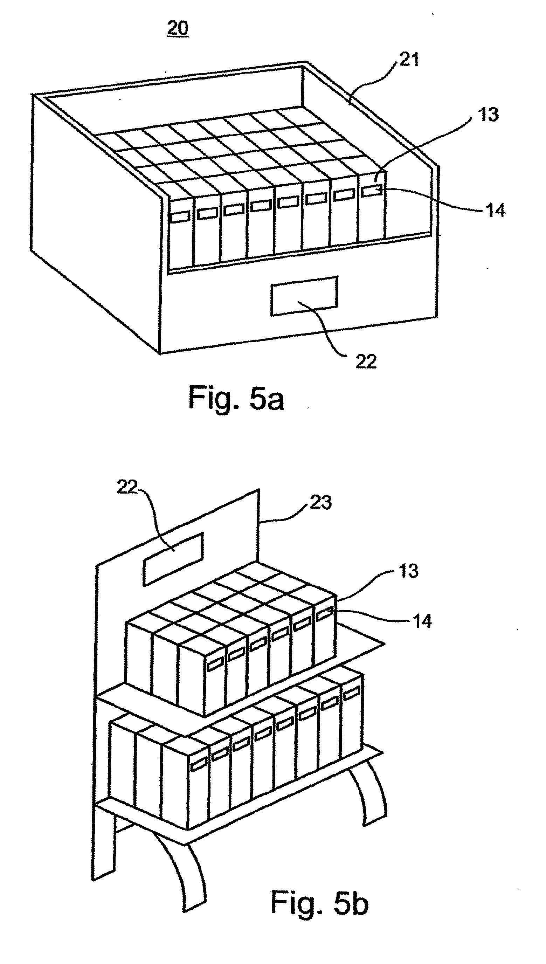

Reference is made to Figures 5a and b. It is the intent of the invention to create an assembly of food units, hereinafter referred to as assembly **20,** comprising a plurality of food units, each containing a different type of food packaged in package **13** in a portion substantially uniform to other packaged portions in caloric content. The assembly will constitute a line of food products, all with similar visually identifying characteristics that will share a nutritional characteristic, i.e. each package **13** containing 100 calories.

To further create assembly **20,** the plurality of food units will be packaged in a container, shown as **21** in Figure 5a, or displayed on a presentation stand preferably designed and configured as display **23** in figure 5b, further indicating their common identity and usage. In order to further assure the association of method **10** with assembly **20,** container **21** and display **23** both have similar visual characteristics and preferably contain markers **22** having the same indications that appear on each package **13,** specifically indication **15** showing the nature or type of food contained in each package and indication **16** showing the predetermined caloric content, and may also preferably contain indication **17** showing the availability of a plurality of different types of food having the same caloric content **18** describing method **10** and how to use the food units to achieve a desired diet.

Consumers will know by the common distinctive marking of package **13,** container **21** and of display **23** that each food unit contained therein or displayed thereon shares a common calorie content of 100. Such common visual caloric content may serve as, or may be adopted by a producer\manufacturer as a marketing "brand" which serves to identify all of the food units sharing the caloric content.

It is easy to visualize that assembly **20** may be set up to create a food marketing chain such as a series of convenience stores or a discrete marketing unit such as a store within a store. For example, a marketing chain such as a supermarket could create a section containing a number of assemblies **20,** each visually identified with common identifying markings and each with its calorie content 100, calorie content 100/no fat, calorie content 100/low sodium, calorie content 100/vitamin B fortified, and many more. The consumer will come to recognize the "brand", or displayed appearance of assembly **20** and will associate it with method **10,** understanding that he needs simply to take and eat the correct number of food units each day to achieve the desired content of personal daily nutrition.

Method **10** provides a number of advantages over existing methods of diet building, monitoring and compliance, as follows:

1. Method **10** eliminates the difficulty in counting calories, especially as most people are unaware of the caloric content of their foods. Method **10** provides a precise and reliable method of monitoring daily calories.

2. Most diets consist of a number of different elements that define the diet, for example length of the diet, how many meals per day, primary foods, and more. Method **10** is flexible and can be adapted to any of such diet requirements.

3. Method **10** teaches, in the most effective way, the issue of portion control, a critical element of every diet and for maintaining a healthy lifestyle.

4. Method **10** includes a wide variety of foods, unlike diets that are based upon prepared foods only. A consumer can choose between hot food and cold food, prepared food or ingredients, between a meal or a snack, and more. Since most people are reluctant to give up the pleasures of life, meaning the tasty food in their menu, method **10** allows a consumer to eat any food even though it may not be defined as dietetic. This flexibility will allow a dieter to build a daily menu that is pleasing and will, therefore, aid in compliance.

5. Method **10** is not based on the statistical average consumer but on a personal and customized approach for each consumer. By using method **10**, anyone can learn his caloric balance point, the daily caloric intake needed to maintain weight. Also, anyone can learn from personal experience whether the amount of calories consumed is the only factor contributing to the maintenance of weight or whether maintenance of weight is related to other factors, such as the types or components of food, physical activity, etc. This examination will allow a consumer to learn healthy eating and other lifestyle habits.

6. The wide variety of foods included within method **10** will allow a marketing chain to create a recognized and attractive product with an identifiable brand, having a variable price to the consumer. "Recognition buying" is known to be a powerful commercial force.

Moreover, method **10** provides an effective way to lose weight. According to the FDA, there are three principles of a successful weight control program;

1. to either reduce the number of calories consumed or to increase the number of calories burned by increasing physical exercise;

2. to avoid sudden or radical changes in eating patterns which will be difficult to sustain; and

3. to make long term changes in daily eating and exercise habits.

Method **10** positively addresses each of the above principles by both teaching the concept of portion control and facilitating the learning of the caloric content of foods eaten. The adoption of method 10 will result in the dieter gaining an understanding of the effect that the desired foods have on his/her body weight and the importance of moderation in the daily consumption of food. This understanding will be gained passively and effortlessly via personal experience and observation and not from laborious study or memorization of charts or tables and will therefore provide a basis for continued adherence to healthy eating habits.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable subcombination.

**Claims**

**1.** A non-therapeutic method of monitoring or controlling a nutritional intake of a subject, the method comprising:

(a) providing a plurality of food packages, each of said food packages containing a respective type of food, a plurality of different types of foods being included among said plurality of packages, each of said food packages indicating a caloric content of 100 calories for the entire package; and

(b) monitoring or controlling a number of said food packages consumed by the subject per eating session or per a predetermined time period;

thereby monitoring or controlling the nutritional intake of the subject.

**2.** A plurality of different types of foods being included in a plurality of packages, each of said food packages indicating a caloric content of 100 calories for the entire package for monitoring or controlling a nutritional intake of a subject having a diet responsive condition.

3. The method of claim 1 or the plurality of different types of foods of claim 2, wherein each of said plurality of food packages is identified with respect to a type of food it contains.

4. The method of claim 1 or the plurality of different types of foods of claim 2, wherein each of said plurality of food packages is identified with respect to said caloric content.

5. The method of claim 1 or the plurality of different types of foods of claim 2, wherein each of said plurality of food packages contains an indication of the availability of a plurality of different types of foods having said caloric content.

6. The method of claim 1 or the plurality of different types of foods of claim 2, wherein each of said plurality of food packages contains an indication of said method.

7. The plurality of different types of foods of claim 2, wherein said diet-responsive condition is selected from the group consisting of obesity, overweight, diabetes, hypercholesterolemia and hyperglycemia.

8. The method of claim 1 or the plurality of different types of foods of claim 2, wherein said foods are selected from the group consisting of natural foods, processed foods and drinks.

9. The method of claim 1 or the plurality of different types of foods of claim 2, wherein said foods are processed to extend shelf life.

10. The method of claim 1 or the plurality of different types of foods of claim 2, wherein each of said packages is marked in a specific manner that identifies it with an assembly which comprises similarly marked packages.

11. The method of claim 1 or the plurality of different types of foods of claim 2, wherein each of said plurality of food packages contains a marker which provides information about said uniform caloric content.

12. The method or the plurality of different types of foods of claim 11, wherein said marker is or includes a removably affixable label.

13. The method of claim 11, further comprising recording said information about said caloric content in a recording device.

14. The method of claim 13, wherein said recording device is a diary or a calendar, said marker being affixable thereto.

15. The method of claim 1 or the plurality of different types of foods of claim 2, wherein the subject participates in a nutritional research.

16. The method of claim 1 or the plurality of different types of foods of claim 2, wherein said plurality of food packages is prepackaged in a container.

17. The method of claim 1 or the plurality of different types of foods of claim 2, wherein said plurality of food packages is displayed on a display.

18. The method as set forth in claim 1, wherein the monitoring or controlling of the number of said food packages consumed by the subject is per a predetermined time period of one day.

19. A food unit comprising:

(a) a package;
(b1) a type of food packaged in said package; and
(c1) an indication in print on or in said package, said indication:

(i) indicating a predetermined caloric content of 100 calories for the entire package; and
(ii) indicating an availability of other food units of a plurality of different types of foods having said predetermined caloric content; or

(b2) a type of food, packaged in said package, having a caloric content of 100 calories +/- 10%; and
(c2) an indication in print on or in said package, said indication indicating:

(i) the caloric content of the food; and
(ii) an availability of other food units of a plurality of different types of foods, each of said plurality of different types of foods having said caloric content of 100 calories +/- 10%.

20. The food unit of claim 19, wherein said indication further indicates a method of monitoring or controlling a nutritional intake of a subject via monitoring or controlling a number of food units consumed by the subject per eating session or per a predetermined time period.

21. The food unit of claim 20, wherein said predetermined time period is one day.

22. The food unit of claim 19, wherein said type of food is selected from the group consisting of natural foods, processed foods and drinks.

23. The food unit of claim 19, wherein said type of food is processed to extend shelf life.

24. The food unit of claim 19, wherein said type of food is for consumption by a subject having a diet-responsive condition.

25. The food unit of claim 24, wherein said diet-responsive condition is selected from the group consisting of obesity, overweight, diabetes, hypercholesterolemia and hyperglycemia.

26. The food unit of claim 19, wherein said indication is located on a marker.

27. The food unit of claim 26, wherein said marker is or includes a removably affixable label.

28. The food unit of claim 19, wherein said food unit is prepackaged in a container.

29. The food unit of claim 19, wherein said plurality of food packages is displayed on a display.

30. The food unit of claim 19, wherein the caloric content is 100 calories.

31. An assembly, comprising a plurality of food units, the plurality of food units including food units of a plurality of different types, each of said food units comprising:

(a1) a respective package indicating a caloric content of 100 calories for the entire package; and
(b1) food, packaged in said package, and having a predetermined caloric content, said predetermined caloric content being uniform for all of said plurality of food units; or
(a2) a respective package; and
(b2) food, packaged in said package, having a caloric content of 100 calories +/- 10%, said caloric content being uniform for all of said plurality of food units.

32. The assembly of claim 31, wherein said indication further indicates the nature of the food in said package.

33. The assembly of claim 31, wherein said indication further indicates the availability of a plurality of different types of foods having said (predetermined) caloric content.

34. The assembly of claim 31, wherein said indication further indicates a method of monitoring or controlling a nutritional intake of a subject via monitoring or controlling a number of food units consumed by the subject per eating session or per a predetermined time period.

35. The assembly of claim 31, wherein said indication is on a marker.

36. The assembly of claim 35, wherein said marker is or includes a removably affixable label.

37. The assembly of claim 35, wherein said plurality of food units of said assembly are packaged in a container.

**38.** The assembly of claim 37, wherein said container comprises therein or thereon an indication in print, said indication indicating the predetermined caloric content.

**39.** The assembly of claim 38, wherein said indication further indicates the nature of the food.

**40.** The assembly of claim 38, wherein said indication further indicates the availability of a plurality of different types of foods having said predetermined caloric content.

**41.** The assembly of claim 38, wherein said indication further indicates a method of monitoring or controlling a nutritional intake of a subject via monitoring or controlling a number of food units consumed by the subject per eating session or per a predetermined time period.

**42.** The assembly of claim 31, wherein said plurality of food units of said assembly are displayed on a display.

**43.** The assembly of claim 42, wherein said display comprises an indication in print, said indication indicating the predetermined caloric content.

**44.** The assembly of claim 43, wherein said indication further indicates the nature of the food contained in said package.

**45.** The assembly of claim 43, wherein said indication further indicates the availability of a plurality of different types of foods having said predetermined caloric content or said caloric content of 100 calories +/- 10%.

**46.** The assembly of claim 43, wherein said indication further indicates a method of monitoring or controlling a nutritional intake of a subject via monitoring or controlling a number of food units consumed by the subject per eating session or per a predetermined time period.

**47.** The assembly of claim 31, wherein said food is selected from the group consisting of natural foods, processed foods and drinks.

**48.** The assembly of claim 31, wherein said food is processed to extend shelf life.

**49.** The assembly as set forth in claim 31, wherein the caloric content is equivalent to 100 calories.

**50.** The assembly as set forth in claim 31, wherein the caloric content is 100 calories.

**51.** The assembly of claim 34 or 41, wherein the monitoring or controlling of the number of said food packages consumed by the subject is per a predetermined time period of one day.

**52.** A non-therapeutic method of monitoring or controlling a nutritional intake of a subject, the method comprising:

(a) providing a plurality of food packages, each of said food packages containing a respective type of food, a plurality of different types of foods being included among said plurality of packages, each of said food packages containing a type of food with a caloric content of 100 calories +/- 10%; and
(b) monitoring or controlling a number of said food packages consumed by the subject per eating session or per a predetermined time period;

thereby monitoring or controlling the nutritional intake of the subject.

**53.** A plurality of food packages, each of said food packages containing a respective type of food, a plurality of different types of foods being included among said plurality of packages, each of said food packages containing a type of food with a caloric content of 100 calories +/- 10% for monitoring or controlling a nutritional intake of a subject having a diet-responsive condition.

**54.** The method of claim 52 or the plurality of food packages of claim 53, wherein each of said plurality of food packages is identified with respect to a type of food it contains.

**55.** The method of claim 52 or the plurality of food packages of claim 53, wherein each of said plurality of food packages is identified with respect to said caloric content.

**56.** The method of claim 52 or the plurality of food packages of claim 53, wherein each of said plurality of food packages contains an indication of the availability of a plurality of different types of foods having said caloric content.

**57.** The method of claim 52 or the plurality of food packages of claim 53, wherein each of said plurality of food packages contains an indication of the method of claim 52.

**58.** The plurality of food packages of claim 53, wherein said diet-responsive condition is selected from the group consisting of obesity, overweight, diabetes, hypercholesterolemia and hyperglycemia.

**59.** The method of claim 52 or the plurality of food packages of claim 53, wherein said foods are selected from the group consisting of natural foods, processed foods and drinks.

**60.** The method of claim 52 or the plurality of food packages of claim 53, wherein said foods are processed to extend shelf life.

**61.** The method of claim 52, wherein each of said packages is marked in a specific manner that identifies it with an assembly which comprises similarly marked packages.

**62.** The method of claim 52 or the plurality of food packages of claim 53, wherein each of said plurality of food packages contains a marker which provides information about said caloric content.

**63.** The method or the plurality of food packages of claim 62, wherein said marker is or includes a removably affixable label.

**64.** The method of claim 62, further comprising recording said information about said caloric content in a recording device.

**65.** The method of claim 64, wherein said recording device is a diary or a calendar, said marker being affixable thereto.

**66.** The method or the plurality of food packages of claim 62, wherein the subject participates in a nutritional research.

**67.** The method or the plurality of food packages of claim 62, wherein said plurality of food packages is prepackaged in a container.

**68.** The method or the plurality of food packages of claim 62, wherein said plurality of food packages is displayed on a display.

**69.** The method as set forth in claim 62, wherein the monitoring or controlling of the number of said food packages consumed by the subject is per a predetermined time period of one day.

**70.** The method or the plurality of food packages as set forth in claim 62, wherein the caloric content is 100 calories.

**Patentansprüche**

**1.** Nicht-therapeutisches Verfahren zum Überwachen oder Kontrollieren der Nährstoffaufnahme eines Individuums, wobei das Verfahren umfasst:

(a) das Bereitstellen einer Vielzahl von Nahrungsmittelpackungen, wobei jede der Nahrungsmittelpackungen eine einzelne Nahrungsmittelart enthält, wobei eine Vielzahl unterschiedlicher Nahrungsmittelarten in der Vielzahl der Packungen eingeschlossen ist, wobei jede der Nahrungsmittelpackungen einen Kaloriengehalt von 100 Kalorien für die gesamte Packung anzeigt; und
(b) das Überwachen oder das Kontrollieren einer Anzahl der Nahrungsmittelpackungen, die von dem Individuum während einer Mahlzeit oder in einem vorbestimmten Zeitabschnitt konsumiert werden;

wobei **dadurch** die Nährstoffaufnahme des Individuums überwacht oder kontrolliert wird.

**2.** Vielzahl unterschiedlicher Nahrungsmittelarten eingeschlossen in einer Vielzahl von Packungen, wobei jede der Nahrungsmittelpackungen einen Kaloriengehalt von 100 Kalorien für die gesamte Packung anzeigt, um die Nahrungsmittelaufnahme eines Individuums zu überwachen oder zu kontrollieren, das ein Leiden hat, welches durch Ernährung beeinflusst werden kann.

3. Verfahren nach Anspruch 1 oder Vielzahl unterschiedlicher Nahrungsmittelarten nach Anspruch 2, wobei jede aus der Vielzahl der Nahrungsmittelpackungen hinsichtlich der Nahrungsmittelart **gekennzeichnet** ist.

4. Verfahren nach Anspruch 1 oder Vielzahl unterschiedlicher Nahrungsmittelarten nach Anspruch 2, wobei jede aus der Vielzahl der Nahrungsmittelpackungen hinsichtlich des Kaloriengehalts **gekennzeichnet** ist.

5. Verfahren nach Anspruch 1 oder Vielzahl unterschiedlicher Nahrungsmittelarten nach Anspruch 2, wobei jede aus der Vielzahl der Nahrungsmittelpackungen eine Angabe über die Verfügbarkeit einer Vielzahl unterschiedlicher Nahrungsmittelarten mit dem Kaloriengehalt enthält.

6. Verfahren nach Anspruch 1 oder Vielzahl unterschiedlicher Nahrungsmittelarten nach Anspruch 2, wobei jede aus der Vielzahl der Nahrungsmittelpackungen eine Angabe des Verfahrens enthält.

7. Vielzahl unterschiedlicher Nahrungsmittelarten nach Anspruch 2, wobei das Leiden, welches durch Ernährung beeinflusst werden kann, ausgewählt ist aus der Gruppe bestehend aus Fettsucht, Übergewicht, Diabetes, Hypercholesterinämie und Hyperglykämie.

8. Verfahren nach Anspruch 1 oder Vielzahl unterschiedlicher Nahrungsmittelarten nach Anspruch 2, wobei die Nahrungsmittel ausgewählt sind aus der Gruppe bestehend aus natürlichen Nahrungsmitteln, verarbeiteten Nahrungsmitteln und Getränken.

9. Verfahren nach Anspruch 1 oder Vielzahl unterschiedlicher Nahrungsmittelarten nach Anspruch 2, wobei die Nahrungsmittel behandelt sind, um die Haltbarkeitsdauer zu verlängern.

10. Verfahren nach Anspruch 1 oder Vielzahl unterschiedlicher Nahrungsmittelarten nach Anspruch 2, wobei jede der Packungen in einer spezifischen Art markiert ist, die sie als einer Gruppe zugehörig ausweist, welche gleichermaßen **gekennzeichnet**e Packungen umfasst.

11. Verfahren nach Anspruch 1 oder Vielzahl unterschiedlicher Nahrungsmittelarten nach Anspruch 2, wobei jede aus der Vielzahl der Nahrungsmittelpackungen eine Markierung enthält, die Informationen über den einheitlichen Kaloriengehalt bereitstellt.

12. Verfahren oder Vielzahl unterschiedlicher Nahrungsmittelarten nach Anspruch 11, wobei die Markierung ein ablösbar anbringbares Kennzeichen ist oder umfasst.

13. Verfahren nach Anspruch 11, ferner das Protokollieren der Information über den Kaloriengehalt in einer Protokollierungsvorrichtung umfassend.

14. Verfahren nach Anspruch 13, wobei die Protokollierungsvorrichtung ein Tagebuch oder ein Kalender ist, wobei das Kennzeichen daran anbringbar ist.

15. Verfahren nach Anspruch 1 oder Vielzahl unterschiedlicher Nahrungsmittelarten nach Anspruch 2, wobei das Individuum an einer Ernährungsuntersuchung teilnimmt.

16. Verfahren nach Anspruch 1 oder Vielzahl unterschiedlicher Nahrungsmittelarten nach Anspruch 2, wobei die Vielzahl der Nahrungsmittelpackungen in einem Behälter vorgepackt ist.

17. Verfahren nach Anspruch 1 oder Vielzahl unterschiedlicher Nahrungsmittelarten nach Anspruch 2, wobei die Vielzahl der Nahrungsmittelpackungen in einem Präsentationsständer präsentiert wird.

18. Verfahren nach Anspruch 1, wobei das Überwachen oder Kontrollieren der Anzahl der durch das Individuum verbrauchten Nahrungsmittelpackungen in einem vorbestimmten Zeitabschnitt von einem Tag stattfindet.

19. Nahrungsmitteleinheit umfassend:

(a) eine Packung;

(b1) eine Nahrungsmittelart verpackt in der Packung; und

(c1) eine gedruckte Angabe auf oder in der Packung, wobei die Angabe:

(i) einen vorbestimmten Kaloriengehalt von 100 Kalorien für die gesamte Packung angibt; und

(ii) die Verfügbarkeit anderer Nahrungsmitteleinheiten einer Vielzahl unterschiedlicher Nahrungsmittelarten, die den vorbestimmten Kaloriengehalt besitzen, angibt; oder

(b2) eine Nahrungsmittelart, die in der Packung verpackt ist und einen Kaloriengehalt von 100 Kalorien +/- 10% besitzt; und

(c2) eine gedruckte Angabe auf oder in der Packung, wobei die Angabe angibt:

(i) den Kaloriengehalt des Nahrungsmittels; und

(ii) die Verfügbarkeit anderer Nahrungsmitteleinheiten einer Vielzahl unterschiedlicher Nahrungsmittelarten, die den Kaloriengehalt von 100 Kalorien +/- 10% besitzen.

20. Nahrungsmitteleinheit nach Anspruch 19, wobei die Angabe ferner ein Verfahren zur Überwachung oder Kontrolle der Nährstoffaufnahme eines Individuums anhand der Überwachung oder der Kontrolle einer Anzahl der Nahrungsmitteleinheiten, die von dem Individuum während einer Mahlzeit oder in einem vorbestimmten Zeitabschnitt konsumiert werden, angibt.

21. Nahrungsmitteleinheit nach Anspruch 20, wobei der vorbestimmte Zeitabschnitt ein Tag ist.

22. Nahrungsmitteleinheit nach Anspruch 19, wobei die Nahrungsmittelart ausgewählt ist aus der Gruppe bestehend aus natürlichen Nahrungsmitteln, verarbeiteten Nahrungsmitteln und Getränken.

23. Nahrungsmitteleinheit nach Anspruch 19, wobei die Nahrungsmittelart behandelt ist, um die Haltbarkeitsdauer zu verlängern.

24. Nahrungsmitteleinheit nach Anspruch 19, wobei die Nahrungsmittelart für den Verzehr durch ein Individuum bestimmt ist, das ein Leiden hat, welches durch Ernährung beeinflusst werden kann.

25. Nahrungsmitteleinheit nach Anspruch 24, wobei das Leiden, welches durch Ernährung beeinflusst werden kann, ausgewählt ist aus der Gruppe bestehend aus Fettsucht, Übergewicht, Diabetes, Hypercholesterinämie und Hyperglykämie.

26. Nahrungsmitteleinheit nach Anspruch 19, wobei die Angabe sich auf einer Markierung befindet.

27. Nahrungsmitteleinheit nach Anspruch 26, wobei die Markierung ein ablösbar anbringbares Kennzeichen ist oder umfasst.

28. Nahrungsmitteleinheit nach Anspruch 19, wobei die Nahrungsmitteleinheit in einem Behälter vorgepackt ist.

29. Nahrungsmitteleinheit nach Anspruch 19, wobei die Vielzahl der Nahrungsmittelpackungen in einem Präsentationsständer präsentiert wird.

30. Nahrungsmitteleinheit nach Anspruch 19, wobei der Kaloriengehalt 100 Kalorien ist.

31. Zusammenstellung, die eine Vielzahl von Nahrungsmitteleinheiten umfasst, wobei die Vielzahl der Nahrungsmitteleinheiten eine Vielzahl unterschiedlicher Nahrungsmittelarten einschließt, wobei jede der Nahrungsmitteleinheiten umfasst:

(a1) eine entsprechende Packung, die den Kaloriengehalt von 100 Kalorien für die gesamte Packung angibt; und

(b1) Nahrungsmittel, das in der Packung verpackt ist und einen vorbestimmten Kaloriengehalt besitzt, wobei der vorbestimmte Kaloriengehalt für alle der Vielzahl der Nahrungsmitteleinheiten einheitlich ist; oder

(a2) eine entsprechende Packung; und

(b2) Nahrungsmittel, das in der Packung verpackt ist und einen Kaloriengehalt von 100 Kalorien +/- 10% aufweist, wobei der Kaloriengehalt für alle der Vielzahl der Nahrungsmitteleinheiten einheitlich ist.

**32.** Zusammenstellung nach Anspruch 31, wobei die Angabe ferner die Art des Nahrungsmittels in der Packung angibt.

**33.** Zusammenstellung nach Anspruch 31, wobei die Angabe ferner die Verfügbarkeit einer Vielzahl unterschiedlicher Nahrungsmittelarten, die den (vorbestimmten) Kaloriengehalt besitzen, angibt.

**34.** Zusammenstellung nach Anspruch 31, wobei die Angabe ferner ein Verfahren zur Überwachung oder Kontrolle der Nährstoffaufnahme eines Individuums anhand der Überwachung oder der Kontrolle einer Anzahl der Nahrungsmitteleinheiten, die von dem Individuum während einer Mahlzeit oder in einem vorbestimmten Zeitabschnitt konsumiert werden, angibt.

**35.** Zusammenstellung nach Anspruch 31, wobei die Angabe sich auf einer Markierung befindet.

**36.** Zusammenstellung nach Anspruch 35, wobei die Markierung ein ablösbar anbringbares Kennzeichen ist oder umfasst.

**37.** Zusammenstellung nach Anspruch 35, wobei die Vielzahl der Nahrungsmitteleinheiten der Zusammenstellung in einem Behälter verpackt ist.

**38.** Zusammenstellung nach Anspruch 37, wobei der Behälter eine gedruckte Angabe umfasst, die sich auf dem Behälter oder in dem Behälter befindet und den vorbestimmten Kaloriengehalt angibt.

**39.** Zusammenstellung nach Anspruch 38, wobei die Angabe ferner die Art des Nahrungsmittels angibt.

**40.** Zusammenstellung nach Anspruch 38, wobei Angabe ferner die Verfügbarkeit einer Vielzahl unterschiedlicher Nahrungsmittelarten, die den vorbestimmten Kaloriengehalt besitzen, angibt.

**41.** Zusammenstellung nach Anspruch 38, wobei die Angabe ferner ein Verfahren zur Überwachung oder Kontrolle der Nährstoffaufnahme eines Individuums anhand der Überwachung oder der Kontrolle einer Anzahl der Nahrungsmitteleinheiten, die von dem Individuum in einer Mahlzeit oder in einem vorbestimmten Zeitabschnitt konsumiert werden, angibt.

**42.** Zusammenstellung nach Anspruch 31, wobei die Vielzahl der Nahrungsmitteleinheiten der Zusammenstellung in einem Präsentationsständer präsentiert wird.

**43.** Zusammenstellung nach Anspruch 42, wobei die Auslage eine gedruckte Angabe umfasst, die den vorbestimmten Kaloriengehalt angibt.

**44.** Zusammenstellung nach Anspruch 43, wobei die Angabe ferner die Art des Nahrungsmittels angibt, das in der Packung enthalten ist.

**45.** Zusammenstellung nach Anspruch 43, wobei die Angabe zudem die Verfügbarkeit einer Vielzahl unterschiedlicher Nahrungsmittelarten, die den vorbestimmten Kaloriengehalt oder den Kaloriengehalt von 100 Kalorien +/-10% besitzen, angibt.

**46.** Zusammenstellung nach Anspruch 43, wobei die Angabe zudem ein Verfahren zur Überwachung oder Kontrolle der Nährstoffaufnahme eines Individuums anhand der Überwachung oder der Kontrolle einer Anzahl der Nahrungsmitteleinheiten, die von dem Individuum während einer Mahlzeit oder in einem vorbestimmten Zeitabschnitt konsumiert werden, angibt.

**47.** Zusammenstellung nach Anspruch 31, wobei das Nahrungsmittel ausgewählt ist aus der Gruppe bestehend aus natürlichen Nahrungsmitteln, verarbeiteten Nahrungsmitteln und Getränken.

**48.** Zusammenstellung nach Anspruch 31, wobei das Nahrungsmittel behandelt ist, um die Haltbarkeitsdauer zu verlängern.

**49.** Zusammenstellung nach Anspruch 31, wobei der Kaloriengehalt äquivalent zu 100 Kalorien ist.

**50.** Zusammenstellung nach Anspruch 31, wobei der Kaloriengehalt 100 Kalorien ist.

51. Zusammenstellung nach Anspruch 34 oder 41, wobei das Überwachen oder Kontrollieren der Anzahl der durch das Individuum verbrauchten Nahrungsmittelpackungen in einem vorbestimmten Zeitabschnitt von einem Tag stattfindet.

52. Nicht-therapeutisches Verfahren zum Überwachen oder Kontrollieren der Nährstoffaufnahme eines Subjekts, wobei das Verfahren umfasst:

    (a) das Bereitstellen einer Vielzahl von Nahrungsmittelpackungen, wobei jede der Nahrungsmittelpackungen eine einzelne Nahrungsmittelart enthält, wobei eine Vielzahl unterschiedlicher Nahrungsmittelarten in der Vielzahl der Packungen eingeschlossen ist, wobei jede der Nahrungsmittelpackungen eine Nahrungsmittelart mit einem Kaloriengehalt von 100 Kalorien +/- 10% enthält; und
    (b) das Überwachen oder das Kontrollieren einer Anzahl der Nahrungsmittelpackungen, die von dem Individuum während einer Mahlzeit oder in einem vorbestimmten Zeitabschnitt konsumiert werden;

wobei **dadurch** die Nährstoffaufnahme des Individuums überwacht oder kontrolliert wird.

53. Vielzahl von Nahrungsmittelpackungen, wobei jede der Nahrungsmittelpackungen eine einzelne Nahrungsmittelart enthält, wobei eine Vielzahl unterschiedlicher Nahrungsmittelarten in der Vielzahl der Packungen eingeschlossen ist, wobei jede der Nahrungsmittelpackungen eine Nahrungsmittelart mit einem Kaloriengehalt von 100 Kalorien +/- 10% enthält, um die Nahrungsmittelaufnahme eines Individuums zu überwachen oder zu kontrollieren, das ein Leiden hat, welches durch Ernährung beeinflusst werden kann.

54. Verfahren nach Anspruch 52 oder Vielzahl von Nahrungsmittelpackungen nach Anspruch 53, wobei jede aus der Vielzahl der Nahrungsmittelpackungen hinsichtlich der darin enthaltenen Nahrungsmittelart **gekennzeichnet** ist.

55. Verfahren nach Anspruch 52 oder Vielzahl von Nahrungsmittelpackungen nach Anspruch 53, wobei jede aus der Vielzahl der Nahrungsmittelpackungen hinsichtlich des Kaloriengehalts **gekennzeichnet** ist.

56. Verfahren nach Anspruch 52 oder Vielzahl von Nahrungsmittelpackungen nach Anspruch 53, wobei jede aus der Vielzahl der Nahrungsmittelpackungen eine Angabe über die Verfügbarkeit einer Vielzahl unterschiedlicher Nahrungsmittelarten, die den Kaloriengehalt besitzen, enthält.

57. Verfahren nach Anspruch 52 oder Vielzahl von Nahrungsmittelpackungen nach Anspruch 53, wobei jede aus der Vielzahl der Nahrungsmittelpackungen eine Angabe des Verfahrens nach Anspruch 52 enthält.

58. Vielzahl von Nahrungsmittelpackungen nach Anspruch 53, wobei das Leiden, welches durch Ernährung beeinflusst werden kann, ausgewählt ist aus der Gruppe bestehend aus Fettsucht, Übergewicht, Diabetes, Hypercholesterinämie und Hyperglykämie.

59. Verfahren nach Anspruch 52 oder Vielzahl von Nahrungsmittelpackungen nach Anspruch 53, wobei die Nahrungsmittel aus der Gruppe bestehend aus natürlichen Nahrungsmitteln, verarbeiteten Nahrungsmitteln und Getränken ausgewählt sind.

60. Verfahren nach Anspruch 52 oder Vielzahl von Nahrungsmittelpackungen nach Anspruch 53, wobei die Nahrungsmittel behandelt sind, um die Haltbarkeitsdauer zu verlängern.

61. Verfahren nach Anspruch 52, wobei jede der Packungen in einer spezifischen Art markiert ist, die sie als einer Gruppe zugehörig ausweist, welche gleichermaßen **gekennzeichnet**e Packungen umfasst.

62. Verfahren nach Anspruch 52 oder Vielzahl von Nahrungsmittelpackungen nach Anspruch 53, wobei jede aus der Vielzahl der Nahrungsmittelpackungen eine Markierung enthält, die Informationen über den Kaloriengehalt bereitstellt.

63. Verfahren oder Vielzahl der Nahrungsmittelpackungen nach Anspruch 62, wobei die Markierung ein ablösbar anbringbares Kennzeichen ist oder umfasst.

64. Verfahren nach Anspruch 62, ferner das Protokollieren der Information über den Kaloriengehalt in einer Protokollierungsvorrichtung umfassend.

**65.** Verfahren nach Anspruch 64, wobei die Protokollierungsvorrichtung ein Tagebuch oder ein Kalender ist, wobei das Kennzeichen daran anbringbar ist.

**66.** Verfahren oder Vielzahl der Nahrungsmittelpackungen nach Anspruch 62, wobei das Individuum an einer Ernährungsuntersuchung teilnimmt.

**67.** Verfahren oder Vielzahl der Nahrungsmittelpackungen nach Anspruch 62, wobei die Vielzahl der Nahrungsmittelpackungen in einem Behälter vorgepackt ist.

**68.** Verfahren oder Vielzahl der Nahrungsmittelpackungen nach Anspruch 62, wobei die Vielzahl der Nahrungsmittelpackungen in einem Präsentationsständer präsentiert wird.

**69.** Verfahren nach Anspruch 62, wobei das Überwachen oder Kontrollieren der Anzahl der durch das Individuum verbrauchten Nahrungsmittelpackungen in einem vorbestimmten Zeitabschnitt von einem Tag stattfindet.

**70.** Verfahren oder Vielzahl der Nahrungsmittelpackungen nach Anspruch 62, wobei der Kaloriengehalt 100 Kalorien ist.

**Revendications**

**1.** Procédé non thérapeutique de surveillance ou de contrôle de la ration nutritionnelle d'un sujet, le procédé consistant à:

(a) fournir une pluralité d'emballages de produits alimentaires, chacun desdits emballages de produits alimentaires contenant un type respectif de produit alimentaire, une pluralité de différents types de produits alimentaires étant incluse parmi ladite pluralité d'emballages, chacun desdits emballages de produits alimentaires indiquant une teneur calorique de 100 calories pour la totalité de l'emballage; et
(b) surveiller ou contrôler le nombre desdits emballages de produits alimentaires consommés par le sujet par session de repas ou par période de temps prédéterminée;

et ainsi surveiller ou contrôler la ration nutritionnelle du sujet.

**2.** Pluralité de différents types de produits alimentaires inclus dans une pluralité d'emballages, chacun desdits emballages de produits alimentaires indiquant une teneur calorique de 100 calories pour la totalité de l'emballage, pour surveiller ou contrôler la ration nutritionnelle d'un sujet ayant un état sensible au régime alimentaire.

**3.** Procédé selon la revendication 1 ou pluralité de différents types de produits alimentaires selon la revendication 2, dans lequel chacun parmi ladite pluralité d'emballages de produits alimentaires est identifié en fonction du type de produit alimentaire qu'il contient.

**4.** Procédé selon la revendication 1 ou pluralité de différents types de produits alimentaires selon la revendication 2, dans lequel chacun parmi ladite pluralité d'emballages de produits alimentaires est identifié en fonction de ladite teneur calorique.

**5.** Procédé selon la revendication 1 ou pluralité de différents types de produits alimentaires selon la revendication 2, dans lequel chacun parmi ladite pluralité d'emballages de produits alimentaires contient une indication de la disponibilité d'une pluralité de différents types de produits alimentaires ayant ladite teneur calorique.

**6.** Procédé selon la revendication 1 ou pluralité de différents types de produits alimentaires selon la revendication 2, dans lequel chacun parmi ladite pluralité d'emballages de produits alimentaires contient une indication dudit procédé.

**7.** Pluralité de différents types de produits alimentaires selon la revendication 2, dans laquelle ledit état sensible au régime alimentaire est choisi dans le groupe constitué par l'obésité, la surcharge pondérale, le diabète, l'hypercholestérolémie et l'hyperglycémie.

**8.** Procédé selon la revendication 1 ou pluralité de différents types de produits alimentaires selon la revendication 2, dans lequel lesdits produits alimentaires sont choisis dans le groupe constitué par les produits alimentaires naturels, les produits alimentaires transformés et les boissons.

9.  Procédé selon la revendication 1 ou pluralité de différents types de produits alimentaires selon la revendication 2, dans lequel lesdits produits alimentaires sont traités pour que leur durée de conservation soit prolongée.

10. Procédé selon la revendication 1 ou pluralité de différents types de produits alimentaires selon la revendication 2, dans lequel chacun desdits emballages est marqué d'une manière spécifique qui l'identifie avec un ensemble qui comprend des emballages marqués de manière similaire.

11. Procédé selon la revendication 1 ou pluralité de différents types de produits alimentaires selon la revendication 2, dans lequel chacun parmi ladite pluralité d'emballages de produits alimentaires contient un marqueur qui fournit des informations concernant ladite teneur calorique uniforme.

12. Procédé ou pluralité de différents types de produits alimentaires selon la revendication 11, dans lequel ledit marqueur est ou comprend une étiquette pouvant être fixée de manière amovible.

13. Procédé selon la revendication 11, comprenant en outre l'enregistrement desdites informations concernant ladite teneur calorique dans un dispositif d'enregistrement.

14. Procédé selon la revendication 13, dans lequel ledit dispositif d'enregistrement est un agenda ou un calendrier, ledit marqueur pouvant être fixé à celui-ci.

15. Procédé selon la revendication 1 ou pluralité de différents types de produits alimentaires selon la revendication 2, dans lequel le sujet participe à une recherche nutritionnelle.

16. Procédé selon la revendication 1 ou pluralité de différents types de produits alimentaires selon la revendication 2, dans lequel ladite pluralité d'emballages de produits alimentaires est préemballée dans un récipient.

17. Procédé selon la revendication 1 ou pluralité de différents types de produits alimentaires selon la revendication 2, dans lequel ladite pluralité d'emballages de produits alimentaires est présentée sur un présentoir.

18. Procédé selon la revendication 1, dans lequel la surveillance ou le contrôle du nombre desdits emballages de produits alimentaires consommés par le sujet est pour une période de temps prédéterminée d'un jour.

19. Unité de produit alimentaire comprenant:

      (a) un emballage;
      (b1) un type de produit alimentaire emballé dans ledit emballage; et
      (c1) une indication imprimée sur ou dans ledit emballage, ladite indication:

         (i) indiquant une teneur calorique prédéterminée de 100 calories pour la totalité de l'emballage; et
         (ii) indiquant une disponibilité d'autres unités de produits alimentaires d'une pluralité de différents types de produits alimentaires ayant ladite teneur calorique prédéterminée;

      ou
      (b2) un type de produit alimentaire, emballé dans ledit emballage, ayant une teneur calorique de 100 calories $\pm$ 10 %; et
      (c2) une indication imprimée sur ou dans ledit emballage, ladite indication indiquant:

         (i) la teneur calorique du produit alimentaire; et
         (ii) une disponibilité d'autres unités de produits alimentaires d'une pluralité de différents types de produits alimentaires, chacun parmi ladite pluralité de différents types de produits alimentaires ayant ladite teneur calorique de 100 calories $\pm$ 10 %.

20. Unité de produit alimentaire selon la revendication 19, dans laquelle ladite indication indique en outre un procédé de surveillance ou de contrôle de la ration nutritionnelle d'un sujet par surveillance ou contrôle du nombre d'unités de produits alimentaires consommées par le sujet par session de repas ou par période de temps prédéterminée.

21. Unité de produit alimentaire selon la revendication 20, dans laquelle ladite période de temps prédéterminée est d'un jour.

**22.** Unité de produit alimentaire selon la revendication 19, dans laquelle ledit type de produit alimentaire est choisi dans le groupe constitué par les aliments naturels, les aliments transformés et les boissons.

**23.** Unité de produit alimentaire selon la revendication 19, dans laquelle ledit type de produit alimentaire est traité pour que sa durée de conservation soit prolongée.

**24.** Unité de produit alimentaire selon la revendication 19, dans laquelle ledit type de produit alimentaire est destiné à être consommé par un sujet ayant un état sensible au régime alimentaire.

**25.** Unité de produit alimentaire selon la revendication 24, dans laquelle ledit état sensible au régime alimentaire est choisi dans le groupe constitué par l'obésité, la surcharge pondérale, le diabète, l'hypercholestérolémie et l'hyperglycémie.

**26.** Unité de produit alimentaire selon la revendication 19, dans laquelle ladite indication est située sur un marqueur.

**27.** Unité de produit alimentaire selon la revendication 26, dans laquelle ledit marqueur est ou comprend une étiquette pouvant être fixée de manière amovible.

**28.** Unité de produit alimentaire selon la revendication 19, dans laquelle ladite unité de produit alimentaire est préemballée dans un récipient.

**29.** Unité de produit alimentaire selon la revendication 19, dans laquelle ladite pluralité d'emballages de produits alimentaires est présentée sur un présentoir.

**30.** Unité de produit alimentaire selon la revendication 19, dans laquelle la teneur calorique est de 100 calories.

**31.** Ensemble comprenant une pluralité d'unités de produits alimentaires, la pluralité d'unités de produits alimentaires comprenant des unités de produits alimentaires d'une pluralité de différents types, chacune desdites unités de produits alimentaires comprenant :

(a1) un emballage respectif indiquant une teneur calorique de 100 calories pour la totalité de l'emballage ; et
(b1) un produit alimentaire, emballé dans ledit emballage, ayant une teneur calorique prédéterminée, ladite teneur calorique prédéterminée étant uniforme pour toutes parmi ladite pluralité d'unités de produits alimentaires ; ou
(a2) un emballage respectif ; et
(b2) un produit alimentaire, emballé dans ledit emballage, ayant une teneur calorique de 100 calories $\pm$ 10 %, ladite teneur calorique étant uniforme pour toutes parmi ladite pluralité d'unités de produits alimentaires.

**32.** Ensemble selon la revendication 31, dans lequel ladite indication indique en outre la nature du produit alimentaire dans ledit emballage.

**33.** Ensemble selon la revendication 31, dans lequel ladite indication indique en outre la disponibilité d'une pluralité de différents types de produits alimentaires ayant ladite teneur calorique (prédéterminée).

**34.** Ensemble selon la revendication 31, dans lequel ladite indication indique en outre un procédé de surveillance ou de contrôle de la ration nutritionnelle d'un sujet par surveillance ou contrôle du nombre d'unités de produits alimentaires consommées par le sujet par session de repas ou par période de temps prédéterminée.

**35.** Ensemble selon la revendication 31, dans lequel ladite indication est sur un marqueur.

**36.** Ensemble selon la revendication 35, dans lequel ledit marqueur est ou comprend une étiquette pouvant être fixée de manière amovible.

**37.** Ensemble selon la revendication 35, dans lequel ladite pluralité d'unités de produits alimentaires dudit ensemble est emballée dans un récipient.

**38.** Ensemble selon la revendication 37, dans lequel ledit récipient comprend, dans ou sur celui-ci, une indication imprimée, ladite indication indiquant la teneur calorique prédéterminée.

**39.** Ensemble selon la revendication 38, dans lequel ladite indication indique en outre la nature du produit alimentaire.

**40.** Ensemble selon la revendication 38, dans lequel ladite indication indique en outre la disponibilité d'une pluralité de différents types de produits alimentaires ayant ladite teneur calorique prédéterminée.

**41.** Ensemble selon la revendication 38, dans lequel ladite indication indique en outre un procédé de surveillance ou de contrôle de la ration nutritionnelle d'un sujet par surveillance ou contrôle du nombre d'unités de produits alimentaires consommées par le sujet par session de repas ou par période de temps prédéterminée.

**42.** Ensemble selon la revendication 31, dans lequel ladite pluralité d'unités de produits alimentaires dudit ensemble est présentée sur un présentoir.

**43.** Ensemble selon la revendication 42, dans lequel ledit présentoir comprend une indication imprimée, ladite indication indiquant la teneur calorique prédéterminée.

**44.** Ensemble selon la revendication 43, dans lequel ladite indication indique en outre la nature du produit alimentaire contenu dans ledit emballage.

**45.** Ensemble selon la revendication 43, dans lequel ladite indication indique en outre la disponibilité d'une pluralité de différents types de produits alimentaires ayant ladite teneur calorique prédéterminée ou ladite teneur calorique de 100 calories $\pm$ 10%.

**46.** Ensemble selon la revendication 43, dans lequel ladite indication indique en outre un procédé de surveillance ou de contrôle de la ration nutritionnelle d'un sujet par surveillance ou contrôle du nombre d'unités de produits alimentaires consommées par le sujet par session de repas ou par période de temps prédéterminée.

**47.** Ensemble selon la revendication 31, dans lequel ledit produit alimentaire est choisi dans le groupe constitué par les aliments naturels, les aliments transformés et les boissons.

**48.** Ensemble selon la revendication 31, dans lequel ledit produit alimentaire est traité pour que sa durée de conservation soit prolongée.

**49.** Ensemble selon la revendication 31, dans lequel la teneur calorique équivaut à 100 calories.

**50.** Ensemble selon la revendication 31, dans lequel la teneur calorique est de 100 calories.

**51.** Ensemble selon la revendication 34 ou 41, dans lequel la surveillance ou le contrôle du nombre desdits emballages de produits alimentaires consommés par le sujet est pour une période de temps prédéterminée d'un jour.

**52.** Procédé non thérapeutique de surveillance ou de contrôle de la ration nutritionnelle d'un sujet, le procédé consistant à :

(a) fournir d'une pluralité d'emballages de produits alimentaires, chacun desdits emballages de produits alimentaires contenant un type respectif de produit alimentaire, une pluralité de différents types de produits alimentaires étant incluse parmi ladite pluralité d'emballages, chacun desdits emballages de produits alimentaires contenant un type de produit alimentaire ayant une teneur calorique de 100 calories $\pm$ 10 % ; et
(b) surveiller ou contrôler le nombre desdits emballages de produits alimentaires consommés par le sujet par session de repas ou par période de temps prédéterminée;

et ainsi surveiller ou contrôler la ration nutritionnelle du sujet.

**53.** Pluralité d'emballages de produits alimentaires, chacun desdits emballages de produits alimentaires contenant un type respectif de produit alimentaire, une pluralité de différents types de produits alimentaires étant incluse parmi ladite pluralité d'emballages, chacun desdits emballages de produits alimentaires contenant un type de produit alimentaire ayant une teneur calorique de 100 calories $\pm$ 10 %, pour surveiller ou contrôler la ration nutritionnelle d'un sujet ayant un état sensible au régime alimentaire.

**54.** Procédé selon la revendication 52 ou pluralité d'emballages de produits alimentaires selon la revendication 53, dans lequel chacun parmi ladite pluralité d'emballages de produits alimentaires est identifié en fonction du type de produit alimentaire qu'il contient.

**55.** Procédé selon la revendication 52 ou pluralité d'emballages de produits alimentaires selon la revendication 53, dans lequel chacun parmi ladite pluralité d'emballages de produits alimentaires est identifié en fonction de ladite teneur calorique.

**56.** Procédé selon la revendication 52 ou pluralité d'emballages de produits alimentaires selon la revendication 53, dans lequel chacun parmi ladite pluralité d'emballages de produits alimentaires contient une indication de la disponibilité d'une pluralité de différents types de produits alimentaires ayant ladite teneur calorique.

**57.** Procédé selon la revendication 52 ou pluralité d'emballages de produits alimentaires selon la revendication 53, dans lequel chacun parmi ladite pluralité d'emballages de produits alimentaires contient une indication du procédé de la revendication 52.

**58.** Pluralité d'emballages de produits alimentaires selon la revendication 53, dans laquelle ledit état sensible au régime alimentaire est choisi dans le groupe constitué par l'obésité, la surcharge pondérale, le diabète, l'hypercholestérolémie et l'hyperglycémie.

**59.** Procédé selon la revendication 52 ou pluralité d'emballages de produits alimentaires selon la revendication 53, dans lequel lesdits produits alimentaires sont choisis dans le groupe constitué par les aliments naturels, les aliments transformés et les boissons.

**60.** Procédé selon la revendication 52 ou pluralité d'emballages de produits alimentaires selon la revendication 53, dans lequel lesdits produits alimentaires sont traités pour que leur durée de conservation soit prolongée.

**61.** Procédé selon la revendication 52, dans lequel chacun desdits emballages est marqué d'une manière spécifique qui l'identifie avec un ensemble qui comprend des emballages marqués de manière similaire.

**62.** Procédé selon la revendication 52 ou pluralité d'emballages de produits alimentaires selon la revendication 53, dans lequel chacun parmi ladite pluralité d'emballages de produits alimentaires contient un marqueur qui fournit des informations concernant ladite teneur calorique.

**63.** Procédé ou pluralité d'emballages de produits alimentaires selon la revendication 62, dans lequel ledit marqueur est ou comprend une étiquette pouvant être fixée de manière amovible.

**64.** Procédé selon la revendication 62, comprenant en outre l'enregistrement desdites informations concernant ladite teneur calorique dans un dispositif d'enregistrement.

**65.** Procédé selon la revendication 64, dans lequel ledit dispositif d'enregistrement est un agenda ou un calendrier, ledit marqueur pouvant être fixé à celui-ci.

**66.** Procédé ou pluralité d'emballages de produits alimentaires selon la revendication 62, dans lequel le sujet participe à une recherche nutritionnelle.

**67.** Procédé ou pluralité d'emballages de produits alimentaires selon la revendication 62, dans lequel ladite pluralité d'emballages de produits alimentaires est préemballée dans un récipient.

**68.** Procédé ou pluralité d'emballages de produits alimentaires selon la revendication 62, dans lequel ladite pluralité d'emballages de produits alimentaires est présentée sur un présentoir.

**69.** Procédé selon la revendication 62, dans lequel la surveillance ou le contrôle du nombre desdits emballages de produits alimentaires consommés par le sujet est pour une période de temps prédéterminée d'un jour.

**70.** Procédé ou pluralité d'emballages de produits alimentaires selon la revendication 62, dans lequel la teneur calorique est de 100 calories.

<u>10</u>

Fig. 1

Fig. 2

15 — Potatoes
16 — 100 calories

18 — Method of..........
17 — Other foods supplying

Fig. 3

30

Date
Date
Date

Date
Date
Date

Fig. 4

Fig. 5a

Fig. 5b

**EP 1 506 017 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3681857 A, Yardley
- US 4310316 A, Thomann
- US 4652241 A, McCarty
- US 4606555 A, Adams
- US 3841260 A, Sharp
- US 4625675 A, Rosenberg
- US 4689019 A, Tilney
- US 6039989 A, Bangs
- US 6102706 A, Khoo